(19) Europäisches Patentamt
European Patent Office
Office européen des brevets

(11) **EP 2 115 110 B1**

(12) **EUROPEAN PATENT SPECIFICATION**

(45) Date of publication and mention
of the grant of the patent:
**14.11.2012 Bulletin 2012/46**

(21) Application number: **07866310.1**

(22) Date of filing: **21.12.2007**

(51) Int Cl.:
*C11D 3/10* *(2006.01)*        *C11D 3/39* *(2006.01)*
*C11D 7/12* *(2006.01)*        *C01B 15/10* *(2006.01)*

(86) International application number:
**PCT/EP2007/064514**

(87) International publication number:
**WO 2008/080905 (10.07.2008 Gazette 2008/28)**

(54) **NON-OXIDISER PERCARBONATE PARTICLES**

NICHTOXIDIERENDE PERCARBONATTEILCHEN

PARTICULES DE PERCARBONATE NON OXYDANTES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **29.12.2006 EP 06127376**

(43) Date of publication of application:
**11.11.2009 Bulletin 2009/46**

(73) Proprietor: **SOLVAY SA
1120 Bruxelles (BE)**

(72) Inventors:
• **RABE, Jürgen H.
56598 Rheinbrohl (DE)**
• **VENBRUX, Henk L., J.
B-Tervueren 3080 (BE)**
• **CLEMENS, Joerg
56598 Rheinbrohl (DE)**
• **HECKEN, Gerd
53562 St Katharinen (DE)**
• **HOFFMANN, Bernd
53604 Bad Honnef (DE)**

(74) Representative: **Vande Gucht, Anne et al
Solvay S.A.
Département de la Propriété Industrielle
Rue de Ransbeek, 310
1120 Bruxelles (BE)**

(56) References cited:
**EP-A- 0 405 797      WO-A-2004/058640**

**Description**

The present application claims the benefit of the European patent application filed under the number 06127376.9 on December 29, 2006.

Introduction

The present invention generally is related to percarbonate containing particles and especially to sodium percarbonate particles presenting an improved stability.

Background of the invention

The use of sodium percarbonate (or sodium carbonate peroxyhydrate) as bleaching agent in detergent compositions for household fabric washing or dish washing is well known. Commonly such detergent compositions contain among other components zeolites as builder material, enzymes, bleach activators and/or perfumes. However, the interaction between sodium percarbonate and other formulation components leads to progressive decomposition of the percarbonate and hence to loss of bleaching power during storage and transportation of the composition.

A number of proposals have been made to overcome this problem, e.g. by interposing a layer between the sodium percarbonate and its environment, called a coating layer. However, while these coatings generally enhance the long term stability of the percarbonate, they often introduce further extraneous components into the detergent compositions, which should not only be avoided with respect to environmental considerations, but which are in turn likely to interact with the detergent components and hence to negatively affect the washing properties of the resulting formulations.

Furthermore, even before the percarbonate powders or particles for use in detergent compositions are introduced in such formulations by the detergent manufacturer, they are relatively hazardous goods and therefore must comply with strict national and international regulations with respect to packaging, handling, storage and transportation.

Object of the invention

The aim of the present invention is to provide new sodium percarbonate particles presenting good long term stability, which are ready for use in the manufacture of detergent, dishwashing and other household cleaning compositions, while reducing packaging, handling, storage and/or transportation constraints generally associated with known products.

General description of the invention

Consequently, the present invention concerns particles containing sodium percarbonate and at least one additive, the amount of constituents other than sodium percarbonate in the particles being such that the particles are classified as non-oxidiser according to the standard test method O.1 of the UN Manual of Tests and Criteria, 4th revised Edition, sub-section 34.4.1 and that the particles have an available oxygen content of below 12 % by weight, wherein the sodium per-carbonate is coated and/or co-granulated with the additive(s).

The United Nations, UN, have developed a scheme for the classification of certain types of dangerous goods and give descriptions of the tests and procedures to arrive at a classification for transport.

Dangerous goods are chemical substances or articles containing chemical substances, which can pose threat to public safety or to the environment during transport through chemical, physical, or nuclear properties if not properly identified or packaged. If they are accidentally released undesirable outcomes such as fires and explosions can occur. The purpose of the various tests is to provide adequate protection against the risks to life and property inherent in the transportation of hazardous materials in commerce.

For example, percarbonate powders or particles, such as those currently used for the preparation of detergent formulations, are typically classified as oxidisers (Class 5 - Oxidising Substances / Division 5.1) according to the test method O.1 of the UN Manual of Tests and Criteria, sub-section 34.4.1 (UN-O.1 test, Transport of dangerous goods, 4th revised edition) and must be labelled and handled accordingly.

Hence, a major advantage of the invention is that the present particles are safer during packaging, handling, storage and transportation.

As stated above, the sodium percarbonate particles of the invention have a content of available oxygen (AvOx) below 12,0 % by weight. The content of available oxygen may be adjusted to any value below this limit, such as from 4,0 to 11,5 % by weight, preferably from 5,0 to 10,5 % by weight, as required or desired for the intended use by controlling the amount of the non percarbonate additive(s). The content of available oxygen is measured by titration with potassium permanganate after dissolution in sulphuric acid (see ISO standard 1917-1982).

Hence, as a second important advantage, it has been found that the upper available oxygen content indicated above is not only sufficient for most needs in the art of detergent and bleaching formulation, but this available oxygen content is furthermore easily adjustable within these limits so as to provide particles which are ready for use by the detergent manufacturer in the formulation of its detergents, without the need for any further treatment, equipment or handling.

Furthermore, as the present particles are conceived as "ready to formulate", i.e. ready to be used in the formulation of particular compositions, such as detergent, dishwashing and other household or industrial cleaning compositions, by choosing as additive(s) only substances commonly used in these target compositions, preferably substances having a dedicated function therein, no additional extraneous components are incorporated in said composition. Hence, there are numerous economical and environmental advantages in that less "useless" substances are to be handled and shipped and whose effects have to be considered in the conception of the target formulations.

The stability of the percarbonate particles may be expressed as heat output at 40 °C measured after storage of 1 g of the product during 7 days at 40 °C in a closed ampoule of 3,5 ml. The measurement of heat output by microcalorimetry consists of using the heat flow or heat leakage principle using a LKB2277 Bio Activity Monitor. The heat flow between an ampoule containing the coated sodium percarbonate particles and a temperature controlled water bath is measured and compared to a reference material with a known heat of reaction.

The present invention further concerns sodium percarbonate particles with a stability expressed as heat output at 40 °C measured (as described above) after storage during 7 days at 40 °C, which is less than 30 $\mu$W/g. In particular, the heat output is less than 20 $\mu$W/g, preferably less than 15 $\mu$W/g, and most preferably less than 10 $\mu$W/g.

The sodium percarbonate particles of the invention is coated with one or more additives. They contain sodium percarbonate core particles, which are surrounded by at least one coating layer. This means that the surface of the sodium percarbonate core particles has been treated, at least once, by contacting it with an additive or with a mixture of additives, so that a layer of that additive or mixture is deposited onto the surface of the core particles. It is recommended to have a coating layer as uniform and homogeneous as possible having all around the surface of the core particle a homogeneous chemical structure, a homogeneous thickness with as less holes as possible. The function of this coating layer is to protect the core material from contact with the environment and especially from contact with humidity present in the environment, which enhances the decomposition of the core material.

The additives which can be used in the present invention can be chosen from builders, alkaline sources, fillers, flowability enhancers and/or glass corrosion protectors, and mixtures thereof and may be organic or inorganic additives, inorganic additives being preferred. The inorganic additives are selected from alkali metal and/or alkaline earth metal (particularly sodium or magnesium) salts of mineral or other inorganic acids. Typical examples include sulphates, bicarbonates, carbonates, trona, phosphates and/or polymeric phosphates, berates, silicates and/or chlorides, their hydrates, as well as and the corresponding boric acids. Illustrative combinations of more than one inorganic additive include carbonate/silicate, and boric acid or borate with sulphate and the combination of a) sulphate, carbonate, carbonate/sulphate, bicarbonate, boric acid, borate, boric acid/sulphate, or borate/sulphate, with b) silicate. Among the organic additives, citrates, polycarboxylates or polyphosphonates salts, as such or in acid form, for example polyaminocarboxylates, like EDTA or DTPA, or polyaminomethylene-phosphonates, like EDTMPA, CDTMPA or DTPMPA, or hydroalkylenephosphonates, like hydroxyethylidenediphosphonate are preferred, alone or in combination with other organic or inorganic additives.

The preferred additives are sodium carbonate, sodium bicarbonate, trona and their mixtures.

The additive(s) present in the sodium percarbonate particles of the present invention represent(s) in general from 5 to 60 % by weight of the total sodium percarbonate particles, in particular from 10 to 50 % by weight and most preferably from 15 to 45 % by weight. When sodium carbonate is the additive, the particles contain advantageously from 30 to 50 % by weight of sodium carbonate and from 70 to 50 % by weight of sodium percarbonate, preferably from 36 to 45 % by weight of sodium carbonate and from 65 to 55 % by weight of sodium percarbonate. Particularly good results are obtained with particles containing about 40 % by weight of sodium carbonate and about 60 % by weight of sodium percarbonate.

The maximum content of available oxygen (AvOx) of the sodium percarbonate particles to stay below the classification as 5.1 material is depending to some extent on the nature of the additive(s).

In an advantageous embodiment, the particles comprise as an additive anhydrous sodium carbonate, the available oxygen content of the particles is below 10 % by weight, preferably below 9 % by weight, the particles have a sodium percarbonate content of from 40 to 60 % by weight and the particles have a water content measured with the Karl-Fischer method of lower than 1 % by weight, preferably lower than 0,5 % by weight, and most preferably lower than 0,3 % by weight (using Aqua 40 from Jena-Analytik at 70 °C constant).

In another advantageous embodiment, the additive is sodium carbonate monohydrate, the available oxygen content of the particles is below 9 % by weight, the particles have a sodium percarbonate content of from 60 to 80 % by weight and they have a crystal water content measured with the Karl-Fischer method at elevated temperature of 1 to 8 % by weight, preferably 2 to 6 % by weight.

Mixtures of anhydrous and hydrated forms of the above salts, such as anhydrous sodium carbonate and sodium carbonate monohydrate may also be used to regulate the water content to the desired value.

The particles preferably contain further additives, which are different from or in a different form as those already included therein and are chosen from ingredients of detergent and dishwashing formulations acting as builder, alkaline source, filler, flowability enhancer and/or glass corrosion protector, such as those mentioned above.

It has to be noted that the use of liquid additive(s) as second or further additive(s) for one or more of the further types of particles or as co-granulation additive is also possible, e.g. when carbonate, phosphates, citrates or other salts are used as solid additive in the further type of particles or as co-granulation additive, these particles may be mixed with such an amount of such liquid substances, that the liquid is adsorbed from the solid additive. Such a liquid could be a liquid acid form of the additives already mentioned or e.g. a liquid surfactant or any other suitable liquid ingredient.

The sodium percarbonate particles of the present invention have a mean particle size of at least 300 $\mu$m, in particular at least 400 $\mu$m, and more particularly at least 500 $\mu$m. The mean particle size is at most 1600 $\mu$m, especially at most 1400 $\mu$m, values of at most 1000 $\mu$m being preferred, for instance at most 900 $\mu$m, preferably the final particles containing sodium percarbonate have a $D_{90} \geq 500$ $\mu$m, i.e. 90 % by weight of the particles have a diameter of 500 $\mu$m or more.

The mean particle size of particles is measured using a sieve set (containing at least 6 sieves of known sieve aperture) to obtain several fractions and weighing each fraction. The mean particle size in $\mu$m (MPS) is then calculated according to the formula

$$MPS = 0.005 \sum_{i=0}^{n} \left[ m_i \left( k_i + k_{i+1} \right) \right]$$

in which n is the number of sieves (not including the sieve pan), mi is the weight fraction in % on sieve i and k; is the sieve aperture in $\mu$m of sieve *i* . The index i increases with increasing sieve aperture. The sieve pan is indicated with the index 0 and has an aperture of $k_0 = 0$ $\mu$m and $m_0$ is the weight retained in the sieve pan after the sieving process. $k_{n+1}$ equals to 1800 $\mu$m and is the maximum size considered for the MPS calculation. A typical sieve set which gives reliable results is defined as follows : n = 6; $k_6 = 1400$ $\mu$m; $k_5 = 1000$ $\mu$m; $k_4 = 850$ $\mu$m; $k_3 = 600$ $\mu$m; $k_2 = 425$ $\mu$m; $k_1 = 150$ $\mu$m.

The sodium percarbonate containing particles of the present invention usually have a bulk density of at least 0,8 g/cm$^3$, in particular at least 0,9 g/cm$^3$. It is generally at most 1,2 g/cm$^3$, especially at most 1,1 g/cm$^3$. The bulk density is measured by recording the mass of a sample in a stainless steel cylinder of internal height and diameter 86,1 mm, after running the sample out of a funnel (upper internal diameter 108 mm, lower internal diameter 40 mm, height 130 mm) placed 50 mm directly above the cylinder.

The sodium percarbonate containing particles of the present invention usually have a 90 % dissolution time of at least 0,1 min, in particular at least 0,5 min. Generally, the 90 % dissolution time is at most 3 min, especially at most 2,5 min. The 90 % dissolution time is the time taken for conductivity to achieve 90 % of its final value after addition of the coated and/or co-granulated sodium percarbonate containing particles to water at 20 °C and 2 g/l concentration. The method used is adapted from ISO 3123-1976 for industrial perborates, the only differences being the stirrer height that is 10 mm from the beaker bottom and a 2-litre beaker (internal diameter 120 mm).

The present invention is also related to a process for producing the above-described sodium percarbonate containing particles.

Hence, in a further aspect, the invention provides for a process for the preparation of particles containing sodium percarbonate and at least one additive, comprising a manufacturing step of the sodium percarbonate, followed by one or more treatment steps wherein the sodium percarbonate is coated with at least one additive.

In a first variation, the process for the preparation of particles containing sodium percarbonate coated with at least one additive, comprises the following steps:

(a) a manufacturing step of the sodium percarbonate,
(b) if necessary, a granulation step of the sodium percarbonate of step (a) alone to obtain particles having appropriate size,
(c) one or more coating steps comprising the coating of the particles obtained in step (b) with at least one additive, and
(d) optionally, a drying step,

wherein the additive(s) in each coating step (c) may be the same or different.

The first step (a) for the manufacture of sodium percarbonate can be carried out by any known process for the preparation of sodium percarbonate.

According to a first option, step (a) can be a liquid crystallization process, in which a solution of sodium carbonate is mixed with a solution of hydrogen peroxide and the formed sodium percarbonate is precipitated into sodium percarbonate core particles, for instance by lowering the temperature and/or by adding salting out agents. The sodium percarbonate is separated from the liquid by for example centrifugation or filtration. A granulation step (b) is generally not required. An example of such a liquid crystallization process is described in the international application WO 97/35806 of SOLVAY INTEROX.

According to a second option, step (a) and (b) may be combined in a fluid bed granulation process, in which a solution or suspension of sodium carbonate and a solution of hydrogen peroxide are sprayed onto a bed of sodium percarbonate seeds which is fluidized with the aid of a fluidizing gas, the carbonate and the hydrogen peroxide react on the surface of the seed particles, the seed particles thereby grow into sodium percarbonate particles. An example of such a fluid bed granulation process is described in GB 1300855 of SOLVAY.

According to a third option, step (a) can be a direct process by reaction of a hydrogen peroxide solution with solid sodium carbonate and/or bicarbonate. An example of such a direct process is described in the United States patent US 6054066 of SOLVAY INTEROX GmbH.

The sodium percarbonate particles obtained according to the first option of step (a) (liquid crystallization process) contain commonly more than 1 % by weight of water, the water content being generally up to 15 % by weight. The particles obtained according to the second option (fluid bed granulation process) contain in general less than 1,5 % by weight of water, in particular less than 1 % by weight of water, a water content of at most 0,8 % by weight being most preferred. The particles obtained according to the third option (direct process) contain typically between 0,1 and 25 % by weight of water.

The water content of sodium percarbonate particles is measured, in the framework of the present invention, according to the following method: a sample is heated and the amount of liberated water is measured by the METTLER method using a Halogen dryer METTLER HR73 equipment in which a cooled sample of about 7,5 g is placed on an aluminium dish, the sample is continuously weighed and dried at 60°C until the weight is constant (maximum weight loss of 1 mg in 90 s).

The coating step (c) of the process of the present invention can be carried out by any adequate coating process, which allows bringing the optionally dried sodium percarbonate particles in contact with the coating additive(s). Any type of mixer or fluid bed reactor can be used for this purpose as coating equipment. A mixer is preferred, especially those containing a mixing drum with rotating tools such as a plough shear mixer type (manufacturer could be Lödige).

In step (c), the coating additive(s) can be used in the form of a solution (preferably an aqueous solution) or in the form of a suspension or slurry, or else in powder form. The use of a coating additive in powder form is described in the international application WO 01/62663 of SOLVAY (Société Anonyme). Solutions of the coating additive are preferred, especially aqueous solutions.

During step (c), it is recommended to have a minimum amount of moisture present in the system to allow to bind the coating layer onto the surface of the sodium percarbonate particles and/or to glue the powders onto the surface of the sodium percarbonate particles or in the coating layer. This moisture can already be present inside the sodium percarbonate particles. It can also be added as the diluent of the aqueous solution or slurry of the coating agent, or else it can be added as such. In the case of coating in a mixer, the moisture content is usually at least 2 % by weight of the weight of the dried sodium percarbonate core particles, in particular at least 3 % by weight, preferably at least 5 % by weight. The moisture content can go up to 30 % by weight of the weight of the dried sodium percarbonate particles, especially up to 20 % by weight, in most cases up to 15 % by weight. In the case of coating in a fluid bed reactor, the moisture content can be lower.

Step (c) of the process of the invention is generally carried out at a temperature of at least 20 °C. The temperature is in many cases at most 80 °C, and especially at most 65 °C.

In a particular form of realisation of the above process, step (c) is carried out in a mixer or in a fluid bed reactor or consecutively in a mixer and in a fluid bed reactor using at least one solution or suspension of at least one additive.

The drying step (d) can be done in any appropriate reactor, such as in a fluid bed drier, in a rotating drum drier, in an oven or in a circulating air oven. The drying step (d) of the process of the present invention can be a distinct step from step (c) or can be carried out simultaneously with step (c) in the same equipment. When the coating step (c) is carried out in a fluid bed reactor, then the drying step (d) is preferably carried out simultaneously with the coating step (c) in the same fluid bed reactor. Typical temperatures for this step are from 50 to 250 °C, especially from 100 to 200 °C.

In the process of the present invention, it can further be advantageous to add at least one additional coating step between steps (c) and (d), optionally preceded by a drying step. This is particularly useful when the additional coating step(s) is (are) carried out in a fluid bed reactor.

In a further embodiment, the above process comprises one or more (intermediate or final) sieving step(s) in order to obtain final particles containing sodium percarbonate having a $D_{90} \geq 500\ \mu m$.

In a further aspect of the invention, the process as described herein further comprises (e) a blending step, wherein the coated and/or co-granulated sodium percarbonate containing particles are blended with one or more further type(s) of particles of different chemical composition, comprising ingredients chosen among those defined for the additives.

An additional aspect envisages the use of such sodium percarbonate containing particles in the preparation of blends for the manufacture of detergent or dishwashing formulations, wherein the blends comprise one or more further type(s) of particles of different chemical composition, comprising ingredients chosen among the compounds as defined for the additives above.

In a further aspect, the invention provides for blends of particles containing sodium percarbonate as described above with one or more further type(s) of particles of different chemical composition, comprising ingredients chosen among the compounds as defined for the additives above.

The invention further concerns the use of such particles or blends as bleaching agent in detergent, dishwashing and/or other household or industrial cleaning compositions.

Finally, a further aspect of the present invention pertains to detergent, dishwashing and other household or industrial cleaning compositions containing the particles or blends described herein. These compositions can also contain further builders, either zeolitic or non-zeolitic (such as phosphate builders). Other possible constituents of the detergent compositions can be surfactants, anti-redeposition and soil suspension agents, bleach activators, optical brightening agents, soil release agents, suds controllers, enzymes, fabric softening agents, perfumes, colours and processing aids. The detergent compositions can take the form of powders, granules, tablets and liquids. Examples

1600 g of uncoated sodium percarbonate (PCS) with a mean particle size of ~ 700 $\mu$m were coated in a Glatt-laboratory spray dryer with ~ 40 % of $Na_2CO_3$.

| | |
|---|---|
| Starting material | : 1600 g PCS |
| Coating agent | : $Na_2CO_3$ |
| Coating level | : 40 % |
| Weight of coating | : 915 g $Na_2CO_3$ |
| Concentration of coating sol. | : 25 % |
| Air pressure | : 2,5 bar |
| Spraying pressure | : 1,8 bar |
| Temperature below bed | : 100-110 °C |
| Temperature above bed | : 50-55 °C |
| Coating time | : ca. 90 minutes |
| Drying time | : 9 minutes |
| Drying temperature | : 70 °C |

The coated PCS had an AvOx of 7,53 % and a water content of 6,4 % measured with the Karl-Fischer method (using Aqua 40 from Jena-Analytik at 70 °C constant).

Other samples were post-dried to a lower water content.

Four samples were prepared:

Sample 1:

Avox 7,53% and water content: 6,4%

Sample 2:

Avox 7,48% and water content: 4,4%

Sample 3:

Avox 7,79% and water content: 2,3%

Sample 4:

Avox 8,78% and water content: 0,5%

With this samples the O.1 Test was performed:

| Sample: | Sample 1 | Sample 2 | Sample 3 | Sample 4 |
|---|---|---|---|---|
| AvOx [% by wt] | 7,53 | 7,48 | 7,79 | 8,78 |
| KF moisture [%] | 6,4 | 4,4 | 2,3 | 0,5 |
| <500$\mu$m [% by wt] | 37,4 | 34,5 | 32,0 | 30,2 |
| Classification | not Division 5.1 (non oxidiser) | not Division 5.1 (non oxidiser) | not Division 5.1, (non oxidiser, but borderline) | Division 5.1 (oxidiser) |
| Burning time (s) PGIII reference: 81 s | 182 | 147 | 87 | 57 |

It is significant that not only the coating agent and coating level have an impact on the classification as oxidiser, but also the amount of crystal water.

Additional tests have been done by, blending commercial sodium percarbonate particles having a content of available oxygen of 13,7 % weight with a sodium bicarbonate powder having the following size distribution :

| mesh | % (m/m) |
|---|---|
| > 500 | 0,8 |
| > 250 | 1,3 |
| > 125 | 64,4 |
| < 125 | 33,5 |

Several blends were prepared and analysed.

The results were :

| PCS (% wt) | Sodium bicarbonate (% wt) | Classification | Burning time |
|---|---|---|---|
| 70 | 30 | not Division 5.1 | 159 $\pm$ 23 |
| 75 | 25 | not Division 5.1 (but borderline) | 85 $\pm$ 5 |
| 80 | 20 | Division 5.1 | 50 $\pm$ 5 |

## Claims

1. Particles containing sodium percarbonate and at least one additive, the amount of constituents other than sodium percarbonate in the particles being such that the particles are classified as non-oxidiser according to the standard test method 0.1 of the UN Manual of Tests and Criteria, sub-section 34.4.1 and that the particles have an available oxygen content of below 12 % by weight, wherein the sodium percarbonate is coated with the additive(s), and wherein the additive is a mixture of anhydrous sodium carbonate and sodium carbonate monohydrate, to regulate the water content to the desired value.

2. The particles according to claim 1, wherein further different additives are chosen from ingredients of detergent and dishwashing formulations acting as builder, alkaline source, filler, flowability enhancer and/or glass corrosion protector, such as alkali metal or alkaline-earth metal sulphates, bicarbonates, carbonates, citrates, phosphates, borates, silicates and/or chlorides, their hydrates, and mixtures thereof.

3. A process for the preparation of particles containing sodium percarbonate and at least one additive according to claims 1 or 2, comprising a manufacturing step of the sodium percarbonate, followed by one or more treatment steps wherein the sodium percarbonate is coated with at least one additive.

4. The process according to claim 3, comprising the steps of:

(a) a manufacturing step of the sodium percarbonate,
(b) optionally, a granulation step of the sodium percarbonate of step (a) alone,
(c) one or more coating steps comprising the coating of the particles obtained in step (b) with at least one additive, and
(d) optionally, a drying step

wherein the additive(s) in step (b) and in each coating step (c) may be the same or different.

5. The process according to claim 4-, wherein step (c) is carried out in a mixer or in a fluid bed reactor or consecutively in a mixer and in a fluid bed reactor using at least one solution or suspension of at least one additive.

6. The process according to any of claims 4 or 5-, wherein step (d) is carried out in a fluid bed reactor.

7. The process according to one any of claims 4 to 6, further comprising one or more sieving step(s) in order to obtain final particles containing sodium percarbonate having a $D_{90} \geq 500$ $\mu$m.

8. The process according to one any of claims 3 to 6, further comprising (e) a blending step, wherein the particles according to claims 1 or 2 are blended with one or more further type(s) of particles of different chemical composition, comprising ingredients chosen among the compounds as defined in claim 3 for the additives.

9. Use of particles according to claims 1 or 2 in the preparation of blends for the manufacture of detergent or dishwashing formulations, wherein the blends comprise one or more further type(s) of particles of different chemical composition, comprising ingredients chosen among the compounds as defined in claim 3 for the additives.

10. Blends of particles according to claims 1 or 2 with one or more further type(s) of particles of different chemical composition, comprising ingredients chosen among the compounds as defined in claim 2 for the additives.

11. Use of particles according to claims 1 or 2 or of blends according to claim 10 as bleaching agent in detergent, dishwashing and/or other household or industrial cleaning compositions.

12. Detergent, dishwashing and other household or industrial cleaning compositions containing the particles according to claims 1 or 2 or blends according to claim 10.

**Patentansprüche**

1. Teilchen, enthaltend Natriumpercarbonat und mindestens ein Additiv, wobei die Gesamtmenge an Bestandteilen außer Natriumpercarbonat in den Teilchen so beschaffen ist, dass die Teilchen gemäß der Standardprüfmethode O.1 des UN Manual of Tests and Criteria, Unterabschnitt 34.4.1, als nichtoxidierend eingestuft werden und dass die Teilchen einen Gehalt an verfügbarem Sauerstoff von weniger als 12 Gew.-% aufweisen, wobei das Natriumpercarbonat mit dem Additiv bzw. den Additiven beschichtet ist und wobei es sich bei dem Additiv um eine Mischung von wasserfreiem Natriumcarbonat und Natriumcarbonatmonohydrat zur Einstellung des Wassergehalts auf den gewünschten Wert handelt.

2. Teilchen nach Anspruch 1, wobei weitere andere Additive unter Bestandteilen von Wasch- oder Reinigungsmittel- und Geschirrreinigerformulierungen, die als Builder, Alkaliquelle, Füllstoff, Fließfähigkeitsverbesserer und/oder Glaskorrosionsschutzmittel wirken, wie Alkalimetall- oder Erdalkalimetallsulfaten, -hydrogencarbonaten, -carbonaten, -citraten, -phosphaten, -boraten, -silikaten und/oder -chloriden, Hydraten und Mischungen davon, ausgewählt sind.

3. Verfahren zur Herstellung von Natriumpercarbonat und mindestens ein Additiv enthaltenden Teilchen nach Anspruch 1 oder 2, umfassend einen Schritt der Herstellung des Natriumpercarbonats gefolgt von einem oder mehreren Behandlungsschritten, in denen das Natriumpercarbonat mit mindestens einem Additiv beschichtet wird.

4. Verfahren nach Anspruch 3, das die folgenden Schritte umfasst:

(a) einen Schritt der Herstellung des Natriumpercarbonats,
(b) gegebenenfalls einen Schritt der Granulierung des Natriumpercarbonats aus Schritt (a) alleine,

(c) einen oder mehrere Beschichtungsschritte, umfassend das Beschichten der in Schritt (b) erhaltenen Teilchen mit mindestens einem Additiv, und
(d) gegebenenfalls einen Trocknungsschritt,

wobei das Additiv bzw. die Additive in Schritt (b) und in jedem Beschichtungsschritt (c) gleich oder verschieden sein kann bzw. können.

**5.** Verfahren nach Anspruch 4, bei dem man Schritt (c) in einem Mischer oder in einem Wirbelschichtreaktor oder aufeinanderfolgend in einem Mischer und in einem Wirbelschichtreaktor unter Verwendung mindestens einer Lösung oder Suspension mindestens eines Additivs durchführt.

**6.** Verfahren nach Anspruch 4 oder 5, bei dem man Schritt (d) in einem Wirbelschichtreaktor durchführt.

**7.** Verfahren nach einem der Ansprüche 4 bis 6, das ferner einen oder mehrere Siebungsschritte zum Erhalt von fertigen Natriumpercarbonat enthaltenden Teilchen mit einem $D_{90} \geq 500 \ \mu$m umfasst.

**8.** Verfahren nach einem der Ansprüche 3 bis 6, das ferner (e) einen Mischschritt umfasst, bei dem man die Teilchen gemäß Anspruch 1 oder 2 mit einem oder mehreren weiteren Typen von Teilchen anderer chemischer Zusammensetzung, umfassend unter den wie in Anspruch 3 für die Additive definierten Verbindungen ausgewählte Bestandteile, mischt.

**9.** Verwendung von Teilchen nach Anspruch 1 oder 2 bei der Herstellung von Mischungen zur Herstellung von Wasch- oder Reinigungsmittel- oder Geschirrreinigerformulierungen, wobei die Mischungen einen oder mehrere weitere Typen von Teilchen anderer chemischer Zusammensetzung, umfassend unter den wie in Anspruch 3 für die Additive definierten Verbindungen ausgewählte Bestandteile, umfassen.

**10.** Mischungen von Teilchen nach Anspruch 1 oder 2 mit einem oder mehreren weiteren Typen von Teilchen anderer chemischer Zusammensetzung, umfassend unter den wie in Anspruch 2 für die Additive definierten Verbindungen ausgewählte Bestandteile.

**11.** Verwendung von Teilchen nach Anspruch 1 oder 2 oder von Mischungen nach Anspruch 10 als Bleichmittel in Wasch- oder Reinigungsmittelzusammensetzungen, Geschirrreinigerzusammensetzungen und/oder anderen Haushaltsreinigungszusammensetzungen oder technischen Reinigungszusammensetzungen.

**12.** Wasch- oder Reinigungsmittelzusammensetzungen, Geschirrreinigerzusammensetzungen und andere Haushaltsreinigungszusammensetzungen oder technische Reinigungszusammensetzungen, die die Teilchen nach Anspruch 1 oder 2 oder Mischungen nach Anspruch 10 enthalten.

**Revendications**

**1.** Particules contenant du percarbonate de sodium et au moins un additif, la quantité de constituants autres que le percarbonate de sodium dans les particules étant telle que les particules sont classées parmi les agents non oxydants selon la méthode d'essai normalisée O.1 du Manuel d'épreuves et de critères de l'ONU, sous-section 34.4.1, et que les particules ont une teneur en oxygène disponible inférieure à 12 % en poids, le percarbonate de sodium étant revêtu de l'additif ou des additifs, et l'additif étant un mélange de carbonate de sodium anhydre et de carbonate de sodium monohydrate, pour ajuster la teneur en eau jusqu'à la valeur désirée.

**2.** Particules selon la revendication 1, différents additifs supplémentaires étant choisis parmi des ingrédients de formulations détergentes et de produits à vaisselle faisant fonction d'adjuvant, de source alcaline, de charge, d'améliorateur d'écoulement et/ou de protecteur contre la corrosion du verre, tels que les sulfates de métaux alcalins ou de métaux alcalino-terreux, les bicarbonates, les carbonates, les citrates, les phosphates, les borates, les silicates et/ou les chlorures, leurs hydrates, et des mélanges de ceux-ci.

**3.** Procédé de préparation de particules contenant du percarbonate de sodium et au moins un additif selon les revendications 1 ou 2, comprenant une étape de fabrication du percarbonate de sodium, suivie d'une ou plusieurs étapes de traitement lors desquelles le percarbonate de sodium est revêtu d'au moins un additif.

**4.** Procédé selon la revendication 3, comprenant les étapes suivantes :

(a) une étape de fabrication du percarbonate de sodium,
(b) éventuellement, une étape de granulation concernant seulement le percarbonate de sodium de l'étape (a),
(c) une ou plusieurs étapes de revêtement consistant à revêtir les particules obtenues à l'étape (b) d'au moins un additif, et
(d) éventuellement, une étape de séchage dans lequel le ou les additifs de l'étape (b) et de chaque étape de revêtement (c) peuvent être identiques ou différents.

**5.** Procédé selon la revendication 4, dans lequel l'étape (c) est exécutée dans un mélangeur ou dans un réacteur à lit fluidisé ou consécutivement dans un mélangeur et dans un réacteur à lit fluidisé en utilisant au moins une solution ou suspension d'au moins un additif.

**6.** Procédé selon l'une quelconque des revendications 4 ou 5, dans lequel l'étape (d) est exécutée dans un réacteur à lit fluidisé.

**7.** Procédé selon l'une quelconque des revendications 4 à 6, comprenant en outre une ou plusieurs étapes de tamisage exécutées pour obtenir des particules finales contenant du percarbonate de sodium ayant une valeur D90 supérieure ou égale à 500 $\mu$m.

**8.** Procédé selon l'une quelconque des revendications 3 à 6, comprenant en outre (e) une étape de mélange, les particules selon les revendications 1 ou 2 étant mélangées avec un ou plusieurs autres types de particules ayant différentes compositions chimiques, comprenant des ingrédients choisis parmi les composés selon la définition énoncée dans la revendication 3 pour les additifs.

**9.** Utilisation de particules selon les revendications 1 ou 2 dans la préparation de mélanges pour la fabrication de formulations détergentes ou de produits à vaisselle, les mélanges comprenant un ou plusieurs autres types de particules ayant différentes compositions chimiques, comprenant des ingrédients choisis parmi les composés selon la définition énoncée dans la revendication 3 pour les additifs.

**10.** Mélanges de particules selon les revendications 1 ou 2 avec un ou plusieurs autres types de particules ayant différentes compositions chimiques, comprenant des ingrédients choisis parmi les composés selon la définition énoncée dans la revendication 2 pour les additifs.

**11.** Utilisation de particules selon les revendications 1 ou 2 ou de mélanges selon la revendication 10 comme agent de blanchiment dans des compositions détergentes, de produits à vaisselle et/ou d'autres produits de nettoyage ménagers ou industriels.

**12.** Compositions détergentes, de produits à vaisselle et/ou d'autres produits de nettoyage ménagers ou industriels contenant les particules selon les revendications 1 ou 2 ou les mélanges selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 06127376 A
- WO 9735806 A
- GB 1300855 A
- US 6054066 A
- WO 0162663 A

**Non-patent literature cited in the description**

- UN Manual of Tests and Criteria